# EUROPEAN PATENT APPLICATION

(11) **EP 4 331 884 A1**
(43) Date of publication of application: **06.03.2024**
(21) Application number: 23194243.4
(22) Date of filing: 30.08.2023
(51) Int. Cl.: B60K 1/04

(54) **SEMI-ISOLATED EV BATTERY MOUNT FOR TORSIONALLY FLEXIBLE CHASSIS**

(30) Priority: 30.08.2022 US 202263402229 P
(71) Applicant: Bollinger Motors Inc., Oak Park, MI 48237 (US)
(72) Inventor: Junga, Antony G., Grosse Pointe Farms (US); Mather, Phillip, Clarkston (US); Peruri, Hara, Troy (US); Burger, Frank, Ortonville (US)
(74) Representative: IP Maison

(57) **Abstract**

The present system as disclosed herein provides for a battery mount system configured to position batteries below an upper plane of a cross member of an electric vehicle chassis. The system of the present application provides a semi-isolated electric vehicle battery mount for a torsionally flexible chassis. The system includes a bracket configured to enable the batteries to be positioned below and between the cross members of the chassis. The bracket generally includes battery hangers and corresponding mounts, a pivot, a pivot pin, a pivot bracket all mounted to the cross member enabling the batteries to rest below an upper plane of the cross member and pivotable with respect to the cross member.

## Description

### CROSS REFERENCE TO RELATED APPLICATIONS

This application claims priority and benefit to Provisional Patent Application Serial No. 63/402,229 filed on August 30, 2022.

### TECHNICAL FIELD

The present specification generally relates to electric vehicles and, more specifically, to a semi-isolated electric vehicle battery mount for a torsionally flexible chassis.

### BACKGROUND

Typically, commercial truck chassis are long and narrow frame rails connected by lateral cross members. These chassis are designed to be rigid and stiff when a load is applied vertically to them, but in order to maintain durability, they need to be flexible in torsion longitudinally. In electric vehicles, when battery packs are rigidly mounted to the frame rails, the frame may become too rigid.

Accordingly, there exists a need in the art to provide an improved electric vehicle battery mount overcoming the aforementioned disadvantages.

### SUMMARY

The system of the present application provides a semi-isolated electric vehicle battery mount for a torsionally flexible chassis. The purpose of the structure described herein is to permit the commercial truck chassis to remain flexible in twist (torsion) along the longitudinal axis while containing one or more rigid battery packs inside and/or underneath the frame rails of the commercial truck chassis. This is achieved by providing a pivot bracket enabling for some torsional rotation of the battery when mounted to the cross members.

Typical battery packs are mounted on top of, underneath, or next to the frame rails of a chassis. By mounting batteries between the frame rails, the batteries are better protected. However, if the batteries are rigidly mounted, the frame may become too rigid and stiff. Accordingly, the present mounting system will allow the frame to remain flexible in torsion allowing the frame to work as designed by providing a pivotable mounting system.

A bracket apparatus for mounting an electric vehicle (EV) battery pack to a chassis, the chassis having frame rails, the bracket apparatus having a first mounting component adapted to securely attach to the battery pack, the first mounting component mounted to the front of the battery pack, a second mounting component adapted to securely attach to the battery pack, the second mounting component mounted to the rear of the battery pack, the first mounting component and the second mounting component mounting the battery pack to the chassis between the frame rails, and a bushing and a pivot pin, the bushing and the pivot pin fixed to a mounting plate to allow the mounting plate to pivot with respect to the chassis during torsional flex thereby permitting the chassis to remain flexible in torsion along a longitudinal axis while containing one or more rigid battery packs inside and/or underneath the frame rails.

A bracket apparatus for mounting an electric vehicle (EV) battery pack to a chassis, the chassis having frame rails, the bracket apparatus having a first mounting component adapted to securely attach to the battery pack, the first mounting component mounted to the front of the battery pack, a second mounting component adapted to securely attach to the battery pack, the second mounting component mounted to the rear of the battery pack, and the first mounting component and the second mounting component mounting the battery pack to the chassis between the frame rails, wherein said first mounting component and said second mounting component are configured to interlock when attached to the EV battery pack and the chassis, thereby securing the EV battery pack to the chassis thereby permitting the chassis to remain flexible in torsion along a longitudinal axis while containing one or more rigid battery packs inside and/or underneath the frame rails.

A mounting system for mounting at least one battery pack to the chassis of an electric vehicle, the chassis having at least one cross member, the mounting system having a pivot, a pivot pin, and a pivot bracket, the pivot bracket mounted to the cross member, a battery hanger, at least one mount, a cross member, the cross member having a first surface and a second surface, a cross panel extending between the first surface and the second surface, the pivot, the pivot pin, and the pivot bracket connected to the cross panel of the cross member, and the battery hangers and the at least one mount connected to the opposite side of the cross panel between the battery and the cross member.

### BRIEF DESCRIPTION OF THE DRAWINGS

The embodiments set forth in the drawings are illustrative and exemplary in nature and not intended to limit the subject matter. The following detailed description of the illustrative embodiments can be understood when read in conjunction with the following drawings, where like structure is indicated with like reference numerals and in which:
FIG. 1 depicts a side view of the batteries and mount system according to one or more embodiments shown and described herein;
FIG. 2 depicts a perspective rear view of the batteries and mount system according to one or more embodiments shown and described herein;
FIG. 3 depicts a perspective front/side view of the batteries and mount system according to one or more embodiments shown and described herein;
FIG. 4 depicts a rear view of the batteries and mount system according to one or more embodiments shown and described herein;
FIG. 5 depicts a front view of the batteries and mount system according to one or more embodiments shown and described herein;
FIG. 6 depicts a perspective rear view of the batteries and mount system according to one or more embodiments shown and described herein; and
FIG. 7 depicts a side view of the batteries and mount system according to one or more embodiments shown and described herein.

### DETAILED DESCRIPTION

The present system as disclosed herein provides for a battery mount system configured to position batteries below an upper plane of a cross member of an electric vehicle chassis between said cross members. The system of the present application provides a semi-isolated electric vehicle battery mount for a torsionally flexible chassis. The system includes a bracket configured to enable the batteries to be positioned below the cross member of the chassis. The bracket generally includes battery hangers and corresponding mounts, a pivot, a pivot pin, a pivot bracket all mounted to the cross member enabling the batteries to rest below an upper plane of the cross member and pivotable with respect to the cross member.

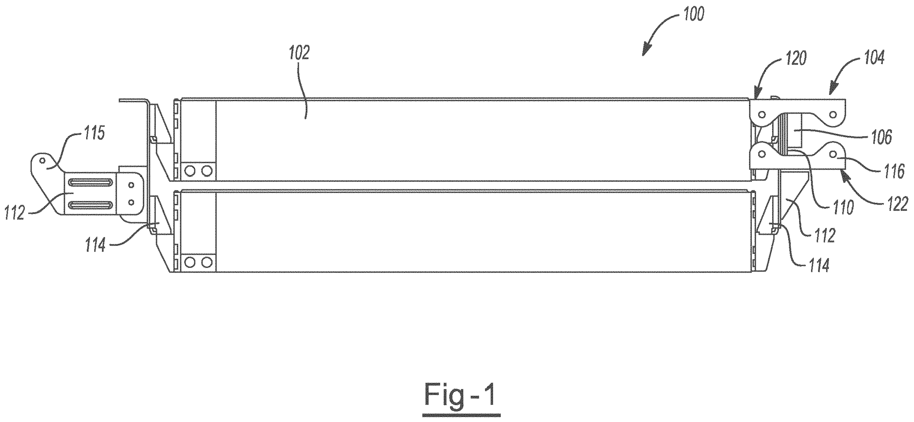

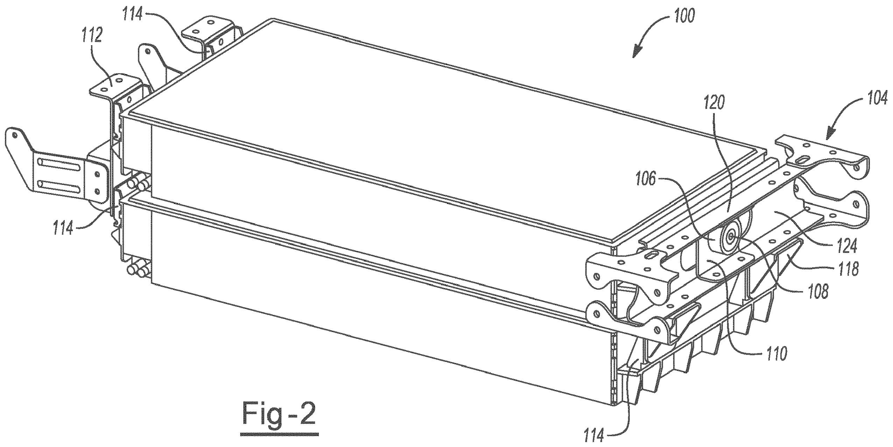

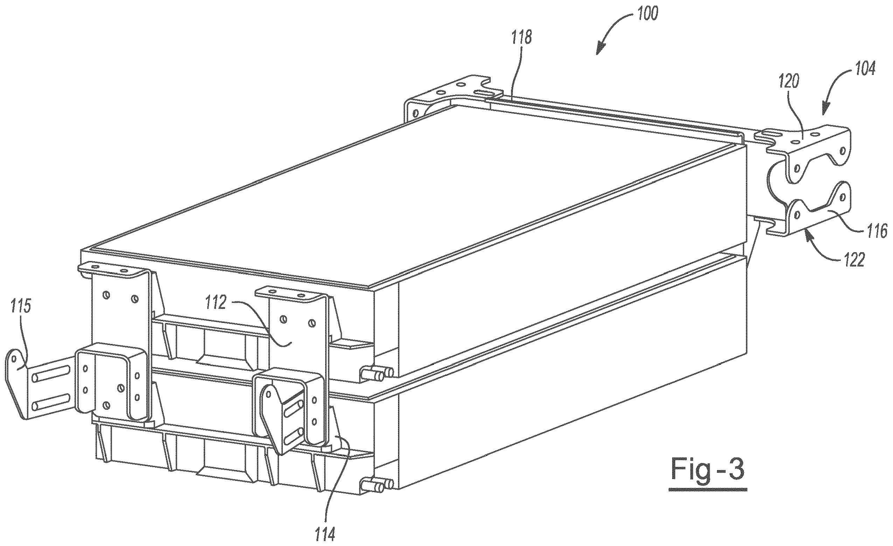

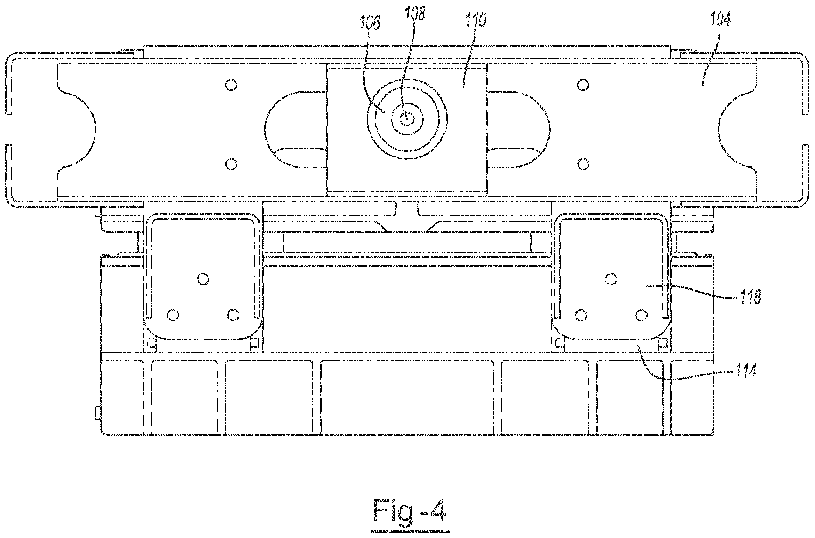

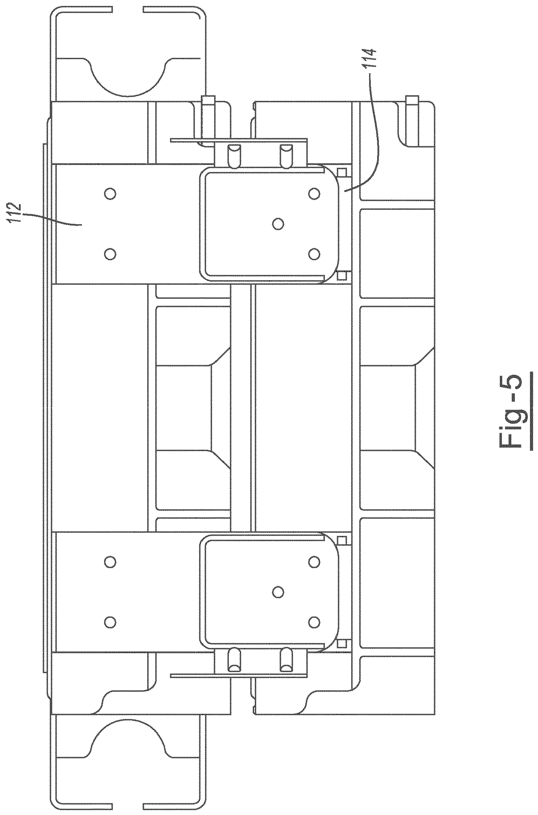

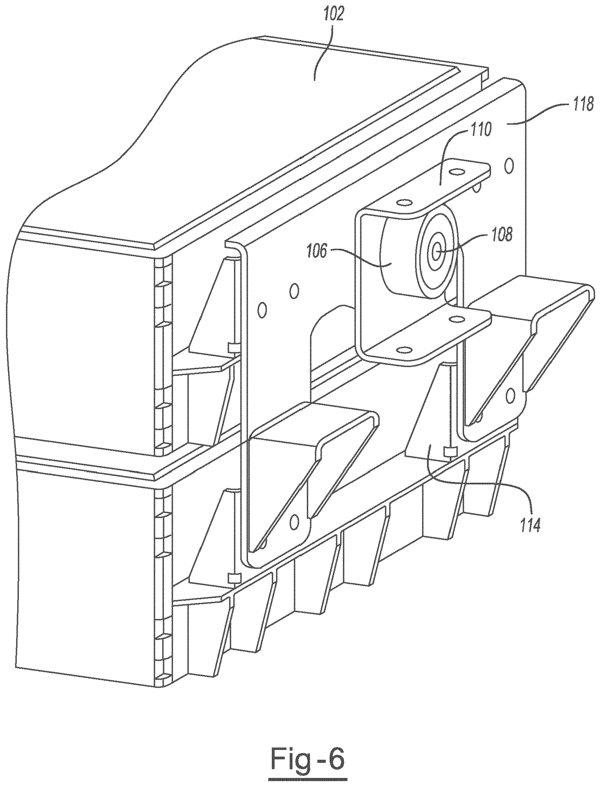

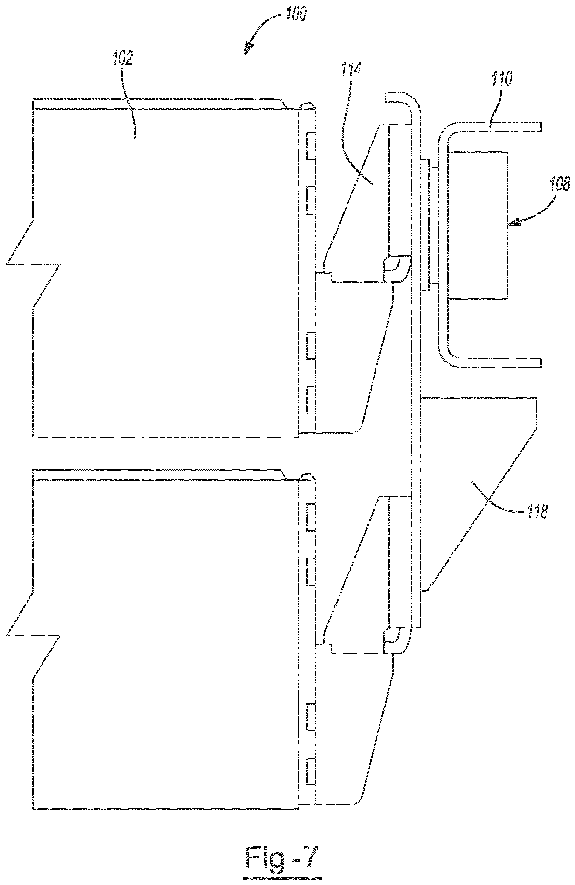

FIGS. 1-7 depict various views of the batteries and mount system according to one or more embodiments shown and described herein wherein the mount system 100 is illustrated having the batteries 102 connected thereto. The mount system includes a pivot 106, a pivot pin 108, a pivot bracket 110 and is illustrate mounted in a cross member 104. A battery hanger 114 and mounts 112 are on the opposite side of the cross member 104. The cross member 104 is illustrated having an upper surface 120 and a lower surface 122. A cross panel 124 extends between the first surface 120 and the second surface 122. The pivot 106, the pivot pin 108, and the pivot bracket 110 connect to the cross panel 124 of the cross member 104. The battery hangers 114 and corresponding mounts 112 connect to the opposite side of the cross panel 124 between the battery 102 and the cross mount 104.

The batteries 102 and mount system 100 are shown including the pivot 106, the pin 108, and pivot bracket 110 can be seen mounted in the cross member 104. The battery hanger 114 and mounts 112 are on the opposite side of the cross member 104.

The battery hangers 114, mount brackets 112, and supports 115 are illustrated. In this embodiment, the brackets 112 hang off of cross member 104.

The purpose of the structure described herein is to permit the commercial truck chassis to remain flexible in twist along the longitudinal axis while containing one or more rigid battery packs inside and/or underneath the frame rails of the commercial truck chassis.

Typical battery packs are mounted on top of, underneath, or next to the frame rails of a chassis. By mounting batteries between the frame rails, the batteries are better protected. However, if the batteries are rigidly mounted, the frame may become too rigid and stiff. Accordingly, the present mounting system will allow the frame to remain flexible in torsion allowing the frame to work as designed.

Although the embodiments of the present invention have been illustrated in the accompanying drawings and described in the foregoing detailed description, it is to be understood that the present invention is not to be limited to just the embodiments disclosed, but that the invention described herein is capable of numerous rearrangements, modifications and substitutions without departing from the scope of the claims hereafter. The claims as follows are intended to include all modifications and alterations insofar as they come within the scope of the claims or the equivalent thereof.

It is noted that the terms "substantially" and "about" may be utilized herein to represent the inherent degree of uncertainty that may be attributed to any quantitative comparison, value, measurement, or other representation.

These terms are also utilized herein to represent the degree by which a quantitative representation may vary from a stated reference without resulting in a change in the basic function of the subject matter at issue.

While particular embodiments have been illustrated and described herein, it should be understood that various other changes and modifications may be made without departing from the spirit and scope of the claimed subject matter.

Unless otherwise stated, any numerical values recited herein include all values from the lower value to the upper value in increments of one unit provided that there is a separation of at least 2 units between any lower value and any higher value. As an example, if it is stated that the amount of a component, a property, or a value of a process variable such as, for example, temperature, pressure, time and the like is, for example, from 1 to 90, preferably from 20 to 80, more preferably from 30 to 70, it is intended that intermediate range values such as (for example, 15 to 85, 22 to 68, 43 to 51, 30 to 32 etc.) are within the teachings of this specification. Likewise, individual intermediate values are also within the present teachings. For values which are less than one, one unit is considered to be 0.0001, 0.001, 0.01 or 0.1 as appropriate. These are only examples of what is specifically intended and all possible combinations of numerical values between the lowest value and the highest value enumerated are to be considered to be expressly stated in this application in a similar manner. As can be seen, the teaching of amounts expressed as "parts by weight" herein also contemplates the same ranges expressed in terms of percent by weight. Thus, an expression in the Detailed Description of the Invention of a range in terms of at "'x' parts by weight of the resulting polymeric blend composition" also contemplates a teaching of ranges of same recited amount of "x" in percent by weight of the resulting polymeric blend composition."

Unless otherwise stated, all ranges include both endpoints and all numbers between the endpoints. The use of "about" or "approximately" in connection with a range applies to both ends of the range. Thus, "about 20 to 30" is intended to cover "about 20 to about 30", inclusive of at least the specified endpoints.

The term "consisting essentially of" to describe a combination shall include the elements, ingredients, components, or steps identified, and such other elements ingredients, components or steps that do not materially affect the basic and novel characteristics of the combination. The use of the terms "comprising" or "including" to describe combinations of elements, ingredients, components, or steps herein also contemplates embodiments that consist essentially of, or even consist of the elements, ingredients, components or steps.

Plural elements, ingredients, components, or steps can be provided by a single integrated element, ingredient, component or step. Alternatively, a single integrated element, ingredient, component, or step might be divided into separate plural elements, ingredients, components or steps. The disclosure of "a" or "one" to describe an element, ingredient, component, or step is not intended to foreclose additional elements, ingredients, components or steps. All references herein to elements or metals belonging to a certain group refer to the Periodic Table of the Elements published and copyrighted by CRC Press, Inc., 1989. Any reference to the group or groups shall be to the group or groups as reflected in this Periodic Table of the Elements using the IUPAC system for numbering groups.

While particular embodiments have been illustrated and described herein, it should be understood that various other changes and modifications may be made without departing from the spirit and scope of the claimed subject matter.

Moreover, although various aspects of the claimed subject matter have been described herein, such aspects need not be utilized in combination.

It is therefore intended that the appended claims (and/or any future claims filed in any utility application) cover all such changes and modifications that are within the scope of the claimed subject matter.

Moreover, although various aspects of the claimed subject matter have been described herein, such aspects need not be utilized in combination.

It is therefore intended that the appended claims cover all such changes and modifications that are within the scope of the claimed subject matter.

## Claims

1. A bracket apparatus for mounting an electric vehicle (EV) battery pack to a chassis, the chassis having frame rails, the bracket apparatus comprising:
a first mounting component adapted to securely attach to the battery pack, the first mounting component mounted to the front of the battery pack;
a second mounting component adapted to securely attach to the battery pack, the second mounting component mounted to the rear of the battery pack;
the first mounting component and the second mounting component mounting the battery pack to the chassis between the frame rails; and
a bushing and a pivot pin, the bushing and the pivot pin fixed to a mounting plate to allow the mounting plate to pivot with respect to the chassis during torsional flex thereby permitting the chassis to remain flexible in torsion along a longitudinal axis while containing one or more rigid battery packs inside and/or underneath the frame rails.

2. A bracket apparatus for mounting an electric vehicle (EV) battery pack to a chassis, the chassis having frame rails, the bracket apparatus comprising:
a first mounting component adapted to securely attach to the battery pack, the first mounting component mounted to the front of the battery pack;
a second mounting component adapted to securely attach to the battery pack, the second mounting component mounted to the rear of the battery pack; and
the first mounting component and the second mounting component mounting the battery pack to the chassis between the frame rails;
wherein said first mounting component and said second mounting component are configured to interlock when attached to the EV battery pack and the chassis, thereby securing the EV battery pack to the chassis thereby permitting the chassis to remain flexible in torsion along a longitudinal axis while containing one or more rigid battery packs inside and/or underneath the frame rails.

3. A mounting system for mounting at least one battery pack to the chassis of an electric vehicle, the chassis having at least one cross member, the mounting system comprising:
a pivot, a pivot pin, and a pivot bracket, the pivot bracket mounted to the cross member;
a battery hanger;
at least one mount;
a cross member, the cross member having a first surface and a second surface, a cross panel extending between the first surface and the second surface;
the pivot, the pivot pin, and the pivot bracket connected to the cross panel of the cross member; and
the battery hangers and the at least one mount connected to the opposite side of the cross panel between the battery and the cross member.
